# FASCICULE DE BREVET EUROPEEN

(11) **EP 3 984 888 B1**
(45) Date de publication et mention de la délivrance du brevet: **23.08.2023**
(21) Numéro de dépôt: 21202735.3
(22) Date de dépôt: 14.10.2021
(51) Int. Cl.: B64D 27/12, B64D 27/18, B64D 27/26

(54) **ENSEMBLE POUR UN AERONEF, LEDIT ENSEMBLE COMPORTANT UN MAT ET UNE AILE**
EINHEIT FÜR EIN LUFTFAHRZEUG, DIE EINEN PYLON UND EINEN FLÜGEL UMFASST
ASSEMBLY FOR AN AIRCRAFT, SAID ASSEMBLY COMPRISING A PYLON AND A WING

(30) Priorité: 19.10.2020 FR 2010695
(43) Date de publication de la demande: 20.04.2022
(73) Titulaire: AIRBUS OPERATIONS, 31060 Toulouse Cedex 9 (FR)
(72) Inventeur: MESSINA, Paolo, 31060 TOULOUSE (FR); PAUTIS, Olivier, 31060 TOULOUSE (FR)
(74) Mandataire: Cabinet Le Guen Maillet

(56) Documents cités:
- EP-A1- 3 626 624
- EP-A1- 3 689 751
- EP-A1- 3 696 089
- WO-A1-2018/192787

## Description

### DOMAINE TECHNIQUE

La présente invention concerne un ensemble pour un aéronef, ledit ensemble comportant un mât et une aile. L'invention propose également un aéronef comportant au moins un tel ensemble, ainsi qu'un procédé d'assemblage d'un tel ensemble.

### ETAT DE LA TECHNIQUE ANTERIEURE

Un aéronef comporte classiquement un fuselage de part et d'autre duquel est fixée une aile qui supporte un mât auquel est fixé un réacteur. L'aile comporte au moins un longeron avant qui s'étend le long du bord d'attaque de l'aile et auquel est fixé au moins partiellement le mât.

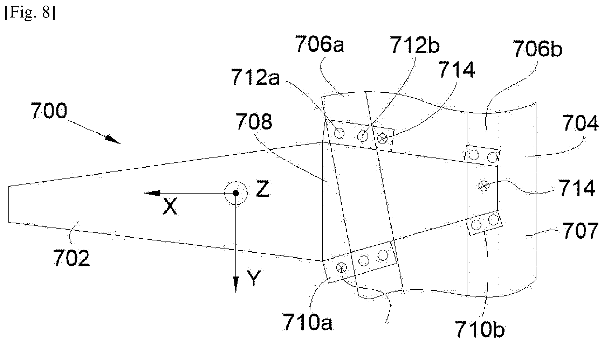

La Fig. 8 montre une vue de dessus d'un ensemble 700 de l'état de la technique qui comporte un mât 702 et une aile 704.

L'aile 704 présente une pluralité de longerons 706a-b s'étendant à l'intérieur d'une peau 707. Le mât 702 présente un longeron supérieur 708, un panneau latéral tribord et un panneau latéral bâbord qui s'étendent verticalement de part et d'autre du longeron supérieur 708 et quatre pelles latérales 710a-b, chacune étant fixée à l'extérieur contre un panneau latéral et de part et d'autre du longeron supérieur 708 avec une à l'arrière et une au milieu du mât 702. L'ensemble 700 comporte également pour chaque pelle latérale 710a-b, deux boulons de tension 712a-b qui prennent en sandwich la pelle latérale 710a-b et un élément de l'aile 704, c'est-à-dire ici les longerons 706a-b. A cette fin, les longerons 706a-b et les pelles latérales 710a-b sont percés d'alésages qui permettent le passage des tiges filetées des boulons de tension 712a-b. Les boulons de tension 712a-b assurent une reprise des efforts perpendiculaires au plan principal de l'interface qui est ici selon une direction principale verticale.

Du fait des tolérances de constructions et de positionnement du mât 702 par rapport à l'aile 704, il est nécessaire de prévoir un jeu important entre les zones lisses des tiges des boulons 712a-b et les alésages qui les reçoivent. Pour assurer une reprise des efforts, en XY, des axes verticaux 714, également appelés « Spigots », sont disposés entre le mât 702 et l'aile 704. Il y a deux spigots 714 à l'avant, à bâbord et à tribord, et un spigot 714 central à l'arrière.

Bien qu'une telle installation donne entière satisfaction, il est nécessaire de trouver une installation différente, qui permet de s'exonérer de l'installation des spigots et de donner une capacité de reprise des efforts de cisaillement, contenus dans le plan principal de l'interface, aux boulons de tension 712a-b et ce sans pour autant induire des tâches d'appairage par contre-perçages sur poste d'assemblage des sous-ensembles, notamment sur les postes de chaînes d'assemblage final. EP-3 626 624 A1 décrit un procédé de montage d'un mât d'aéronef selon l'art antérieur.

### EXPOSE DE L'INVENTION

Un objet de la présente invention est de proposer un ensemble pour un aéronef qui comporte une aile et un mât fixé à l'aile et dont l'architecture permet de s'exonérer de l'installation de spigots tout en assurant la reprise des efforts en XY par les boulons.

A cet effet, est proposé un ensemble pour un aéronef, ledit ensemble comportant :
- un mât avec un longeron supérieur, deux panneaux latéraux qui s'étendent verticalement sous le longeron supérieur et quatre pelles latérales, chacune étant fixée à l'extérieur contre un panneau latéral sous le longeron supérieur, avec deux pelles latérales par panneau latéral et, par panneau latéral, il y a une pelle latérale au niveau de l'arrière du mât et une pelle latérale globalement au milieu du mât,
- une aile comportant une peau, des longerons longitudinaux et des ferrures fixées, d'une part, à l'intérieur de la peau, et, d'autre part, aux longerons longitudinaux et
- pour chaque pelle latérale, deux ensembles de fixation, où pour chaque ensemble de fixation, la peau et la ferrure comportent chacune un premier alésage se prolongeant l'un l'autre, et le longeron supérieur et la pelle latérale comportent chacun un deuxième alésage se prolongeant l'un l'autre,
où chaque ensemble de fixation comporte :
- une vis traversant les premiers alésages et les deuxièmes alésages, et présentant une zone lisse du côté de sa tête et une zone filetée à l'opposé de sa tête,
- un écrou vissé sur la zone filetée de la vis,
- une bague excentrique intérieure, présentant un fût et un épaulement, où la surface intérieure du fût et la surface extérieure du fût sont des cylindres de révolution désaxés l'un par rapport à l'autre, où la bague excentrique intérieure est enfilée sur la zone lisse de la vis,
- une bague excentrique extérieure, présentant un fût et un épaulement, où la surface intérieure du fût et la surface extérieure du fût sont des cylindres de révolution désaxés l'un par rapport à l'autre, où la bague excentrique extérieure est enfilée sur la bague excentrique intérieure, où les deux bagues excentriques sont logées et montées ajustées en diamètre dans les deuxièmes alésages, et
- un système d'arrêt en rotation qui bloque la rotation des bagues excentriques,
où, entre la tête de la vis et l'écrou, sont pris successivement en sandwich, l'épaulement de la bague excentrique intérieure, l'épaulement de la bague excentrique extérieure, la pelle latérale, le longeron supérieur, la peau, et la ferrure.

L'invention propose un ensemble pour un aéronef, ledit ensemble comportant :
- un mât avec un longeron supérieur, deux panneaux latéraux qui s'étendent verticalement sous le longeron supérieur et quatre pelles latérales, chacune étant fixée à l'extérieur contre un panneau latéral sous le longeron supérieur, avec deux pelles latérales par panneau latéral et, par panneau latéral, il y a une pelle latérale au niveau de l'arrière du mât et une pelle latérale globalement au milieu du mât,
- une aile comportant une peau, des longerons longitudinaux et des ferrures fixées, d'une part, à l'intérieur de la peau, et, d'autre part, aux longerons longitudinaux, et
- pour chaque pelle latérale, deux ensembles de fixation, où pour chaque ensemble de fixation, le longeron supérieur et la pelle latérale comportent chacun un premier alésage se prolongeant l'un l'autre et la peau et la ferrure comportent chacune un deuxième alésage se prolongeant l'un l'autre,
où chaque ensemble de fixation comporte :
- une vis traversant les premiers alésages et les deuxièmes alésages, et présentant une zone lisse du côté de sa tête et une zone filetée à l'opposé de sa tête,
- un écrou vissé sur la zone filetée de la vis,
- une bague excentrique intérieure, présentant un fût et un épaulement, où la surface intérieure du fût et la surface extérieure du fût sont des cylindres de révolution désaxés l'un par rapport à l'autre, où la bague excentrique intérieure est enfilée sur la zone lisse de la vis,
- une bague excentrique extérieure, présentant un fût et un épaulement, où la surface intérieure du fût et la surface extérieure du fût sont des cylindres de révolution désaxés l'un par rapport à l'autre, où la bague excentrique extérieure est enfilée sur la bague excentrique intérieure, où les deux bagues excentriques sont logées et montées ajustées en diamètre dans les deuxièmes alésages, et
- un système d'arrêt en rotation qui bloque la rotation des bagues excentriques,
où, entre la tête de la vis et l'écrou, sont pris successivement en sandwich, l'épaulement de la bague excentrique intérieure, l'épaulement de la bague excentrique extérieure, la ferrure et la peau, le longeron supérieur et la pelle latérale.

Dans chacun de ces modes de réalisation, l'ensemble permet de s'affranchir de l'utilisation des spigots tout en assurant la reprise des efforts de cisaillement contenus dans le plan XY par les boulons du fait des tolérances réduites entre les alésages, les surfaces externes et internes des bagues excentriques et les zones lisses des vis.

Avantageusement, les premiers alésages ont un diamètre adapté au diamètre de la zone lisse de la vis de manière à avoir un montage ajusté.

Avantageusement, la bague excentrique intérieure est enfilée et ajustée en diamètre sur la zone lisse de la tige de la vis, et la bague excentrique extérieure est enfilée et ajustée en diamètre sur la bague excentrique intérieure.

Selon un mode de réalisation particulier, chaque système d'arrêt en rotation comporte une rondelle striée fixée à la pelle latérale, respectivement à la ferrure, l'épaulement de la bague excentrique extérieure est strié sur chacune de ses faces, et l'épaulement de la bague excentrique intérieure est strié sur la face qui est en contact avec l'épaulement de la bague excentrique extérieure.

Selon un mode de réalisation particulier, chaque système d'arrêt en rotation comporte une platine fixée à la pelle latérale, respectivement à la ferrure, la périphérie de l'épaulement de chaque bague excentrique est crantée et pour chaque épaulement, la platine présente un secteur cranté qui coopère avec les crans dudit épaulement pour le bloquer en rotation.

L'invention propose également un aéronef comportant au moins un ensemble selon l'une des variantes précédentes.

L'invention propose également un procédé d'assemblage de l'ensemble selon le premier mode de réalisation, où le procédé consiste en :
- une étape de mise en place au cours de laquelle le mât est positionné par rapport à l'aile en alignant visuellement les huit paires des premiers et deuxièmes alésages,
pour chaque paire des premiers et deuxièmes alésages :
- une étape de présentation au cours de laquelle un ensemble de fixation est présenté au niveau de ladite paire, en insérant l'extrémité de la tige de la vis dans les deuxièmes alésages puis les premiers alésages,
- une étape de mise en position au cours de laquelle l'extrémité du fût de la bague excentrique extérieure est amenée à l'entrée du deuxième alésage de la pelle latérale sans y pénétrer,
- une étape de réglage au cours de laquelle la bague excentrique intérieure et la bague excentrique extérieure sont manipulées en rotation autour de leurs axes pour aligner la surface extérieure du fût de la bague excentrique extérieure avec le deuxième alésage de la pelle latérale, tout en assurant le maintien en position de la vis par rapport aux premiers alésages,
- une étape d'enfoncement au cours de laquelle l'ensemble de fixation est enfoncé dans les deuxièmes alésages,
- une étape d'arrêt en rotation au cours de laquelle le système d'arrêt en rotation bloque la rotation des bagues excentriques, et
- une étape de serrage au cours de laquelle l'écrou est serré sur la tige de la vis.

L'invention propose également un procédé d'assemblage de l'ensemble selon le deuxième mode de réalisation, où le procédé consiste en :
- une étape de mise en place au cours de laquelle le mât est positionné par rapport à l'aile en alignant visuellement les huit paires des premiers et deuxièmes alésages,
pour chaque paire des premiers et deuxièmes alésages :
- une étape de présentation au cours de laquelle un ensemble de fixation est présenté au niveau de ladite paire, en insérant l'extrémité de la tige de la vis dans les deuxièmes alésages puis les premiers alésages,
- une étape de mise en position au cours de laquelle l'extrémité du fût de la bague excentrique extérieure est amenée à l'entrée du deuxième alésage de la ferrure sans y pénétrer,
- une étape de réglage au cours de laquelle la bague excentrique intérieure et la bague excentrique extérieure sont déplacées en rotation autour de leurs axes pour aligner la surface extérieure du fût de la bague excentrique extérieure avec le deuxième alésage de la ferrure, tout en assurant le maintien en position de la vis par rapport aux premiers alésages,
- une étape d'enfoncement au cours de laquelle l'ensemble de fixation est enfoncé dans les deuxièmes alésages,
- une étape d'arrêt en rotation au cours de laquelle le système d'arrêt en rotation bloque la rotation des bagues excentriques, et
- une étape de serrage au cours de laquelle l'écrou est serré sur la tige de la vis.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble selon l'invention,
Fig. 2 est une vue en perspective d'un ensemble selon un premier mode de réalisation de l'invention en vue de côté,
Fig. 3 est une vue en coupe selon le plan III de la Fig. 2 du premier mode de réalisation de l'invention,
Fig. 4 est une vue similaire à la Fig. 3 pour un mode d'arrêt en rotation alternatif,
Fig. 5 est une vue selon la flèche V de la Fig. 4 du mode d'arrêt en rotation alternatif,
Fig. 6 est une vue similaire à la Fig. 3 pour un deuxième mode de réalisation de l'invention,
Fig. 7 est une vue en perspective et en vue éclatée d'un ensemble de fixation, et
Fig. 8 est une vue de dessus d'un ensemble de l'état de la technique.

### EXPOSE DETAILLE DE MODES DE REALISATION

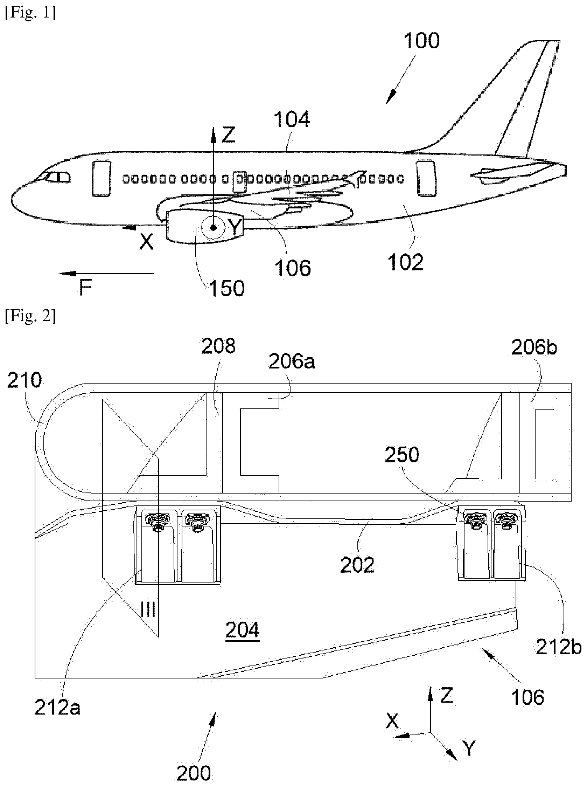

La Fig. 1 montre un aéronef 100 qui comporte un fuselage 102 de chaque côté duquel est fixée une aile 104 qui porte au moins un réacteur 150, en particulier un turboréacteur double flux.

La fixation du réacteur 150 sous l'aile 104 s'effectue par l'intermédiaire d'un mât 106.

Dans la description qui suit, et par convention, on appelle X la direction longitudinale du réacteur 150 et orientée positivement vers l'avant de l'aéronef 100, on appelle Y la direction transversale qui est horizontale lorsque l'aéronef est au sol, et Z la direction verticale, ces trois directions X, Y et Z étant orthogonales entre elles.

D'autre part, les termes " avant " et " arrière " sont à considérer par rapport à une direction d'avancement de l'aéronef 100 lors du fonctionnement du réacteur 150, cette direction étant représentée schématiquement par la flèche F sur la Fig. 1.

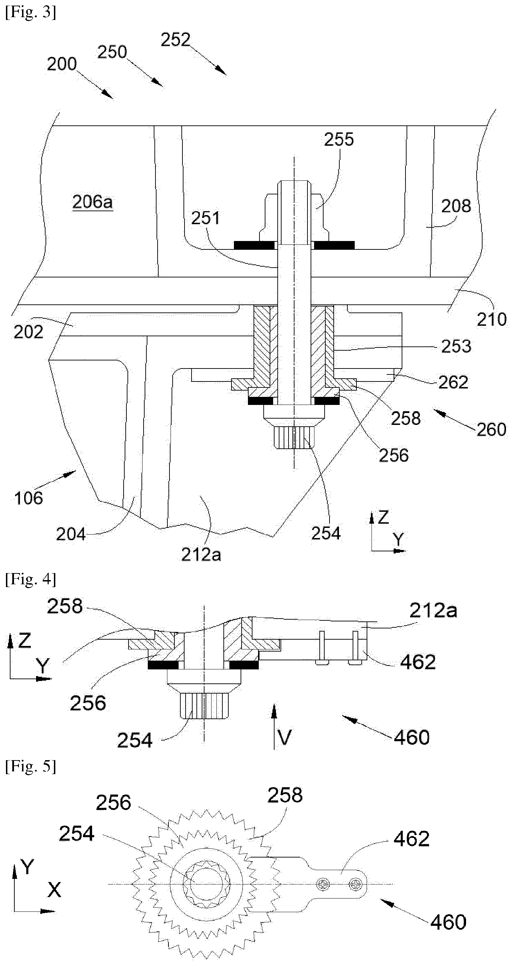

La Fig. 2 et la Fig. 3 montrent un ensemble 200 selon un premier mode de réalisation de l'invention.

L'ensemble 200 selon un premier mode de réalisation de l'invention comporte le mât 106 avec un longeron supérieur 202 et deux panneaux latéraux 204, à savoir un panneau latéral bâbord et un panneau latéral tribord. Les panneaux latéraux 204 s'étendent verticalement sous le longeron supérieur 202.

L'ensemble 200 comporte également l'aile 104 qui comporte une peau 210 qui forme la surface aérodynamique de l'aile 104 à l'intérieur de laquelle sont disposés des longerons longitudinaux 206a-b et des ferrures 208 où chacune prend ici la forme d'une équerre. La peau 210 est fixée aux longerons longitudinaux 206a-b et les ferrures 208 sont disposées contre les longerons longitudinaux 206 a-b et chaque ferrure 208 est fixée, d'une part, à un longeron longitudinal 206a-b et, d'autre part, à l'intérieur de la peau 210.

Le mât 106 comporte également quatre pelles latérales 212a-b, chacune étant fixée à l'extérieur contre un panneau latéral 204 sous le longeron supérieur 202. Il y a deux pelles latérales 212a-b par côté, c'est-à-dire par panneau latéral 204, et, par panneau latéral 204, il y a une pelle latérale 212b au niveau de l'arrière du mât 106 et une pelle latérale 212a globalement au milieu du mât 106.

Chaque pelle latérale 212a-b prend ici la forme d'une équerre et présente une surface supérieure de contact qui vient en appui sous le longeron supérieur 202 et une surface latérale de contact qui vient en appui contre le panneau latéral 204 à laquelle elle est fixée par exemple par des boulons, des points de soudure ou autres.

La Fig. 3 montre une coupe par un plan YZ perpendiculaire à la direction longitudinale X. Pour chaque pelle latérale 212a-b, l'ensemble 200 comporte deux ensembles de fixation 250 où chaque ensemble de fixation 250 assure la fixation de ladite pelle latérale 212a-b à une des ferrures 208 à travers le longeron supérieur 202 et la peau 210.

Pour chaque ensemble de fixation 250, la peau 210 et la ferrure 208 côté aile comportent chacune un premier alésage 251. Le premier alésage 251 de la peau 210 et le premier alésage 251 de la ferrure 208 se prolongent l'un l'autre et sont donc coaxiaux.

De la même manière, le longeron supérieur 202 et la pelle latérale 212a-b côté mât comportent chacun un deuxième alésage 253. Le deuxième alésage 253 du longeron supérieur 202 et le deuxième alésage 253 de la pelle latérale 212a-b se prolongent l'un l'autre et sont donc coaxiaux.

Il y a donc huit paires des premiers alésages 251 et autant de deuxièmes alésages 253. Le premier alésage 251 de la peau 210 et le premier alésage 251 de la ferrure 208 ont le même diamètre. Le deuxième alésage 253 du longeron supérieur 202 et le deuxième alésage 253 de la pelle latérale 212a-b ont le même diamètre. Chaque paire de deuxièmes alésages 253 côté mât s'aligne avec une paire de premiers alésages 251 côté aile, et le diamètre des deuxièmes alésages 253 est supérieur au diamètre des premiers alésages 251.

Chaque ensemble de fixation 250 comporte un boulon 252 avec une vis 254 et un écrou 255, deux bagues excentriques 256 et 258 et un système d'arrêt en rotation 260 qui bloque la rotation des bagues excentriques 256 et 258 avant le serrage de la vis 254 et de l'écrou 255. À cette fin, la tige de la vis 254 comporte une zone lisse du côté de sa tête et une zone filetée à l'opposé de sa tête. La vis 254 est dimensionnée pour que la zone lisse s'étende le long des premiers alésages 251 et des deuxièmes alésages 253 et la zone filetée est au-delà des premiers alésages 251.

L'ensemble de fixation 250 comporte ainsi une bague excentrique intérieure 256 et une bague excentrique extérieure 258.

Chaque bague excentrique 256, 258 présente un fût et un épaulement, où la surface intérieure du fût et la surface extérieure du fût sont des cylindres de révolution désaxés l'un par rapport à l'autre, c'est-à-dire que leurs axes sont parallèles mais distincts.

La bague excentrique intérieure 256 est enfilée et ajustée en diamètre sur la zone lisse de la tige de la vis 254, la bague excentrique extérieure 258 est enfilée et ajustée en diamètre sur la bague excentrique intérieure 256. Les deux bagues excentriques 256 et 258 sont logées et `montées ajustées' en diamètre dans les deuxièmes alésages 253. La tige de la vis 254 traverse les premiers alésages 251 et les deuxièmes alésages 253 pour que la zone filetée de la vis 254 se visse dans l'écrou 255.

Il est à noter que la notion de montage ajusté précédemment citée consiste à avoir une jonction présentant un axe et un alésage au même diamètre nominal et avec un jeu réduit à son minimum pour en permettre l'assemblage. Ce type de montage dit 'ajusté' est reconnu par l'homme du métier pour pouvoir transmettre des efforts de cisaillement par contact sans risque de glissement et détérioration de la liaison. Un tel montage ajusté est par exemple du type H7g6.

Les épaulements des bagues excentriques 256 et 258 sont pris en sandwich entre une face d'appui inférieur de la pelle latérale 212a-b et une face d'appui sous la tête de la vis 254.

Il est ainsi possible en tournant indépendamment chaque bague excentrique 256, 258, d'une part, de trouver une combinaison de réglage permettant de rendre coaxial l'axe des premiers alésages 251 et l'axe de la surface intérieure du fût de la bague excentrique intérieure 256 pour avoir une vis 254 parfaitement alignée avec cet axe coté aile, et d'autre part, d'ajuster la position de la surface extérieure du fût de la bague excentrique extérieure 258 par rapport aux deuxièmes alésages 253 coté mât.

Les premiers alésages 251 ont un diamètre adapté au diamètre de la zone lisse de la vis 254 de manière à avoir un montage ajusté, par exemple du type H7g6.

Les écarts entre chaque vis 254 et les alésages qui l'entourent sont alors réduits et les efforts de cisaillement contenus dans le plan XY peuvent être repris par chaque boulon 252 de chaque ensemble de fixation 250 et il n'est plus nécessaire de mettre en place des spigots. Dans le mode de réalisation de l'invention de la Fig. 3, entre la tête de la vis 254 et l'écrou 255, sont pris successivement en sandwich, l'épaulement de la bague excentrique intérieure 256, l'épaulement de la bague excentrique extérieure 258, la pelle latérale 212a-b, le longeron supérieur 202, la peau 210, et la ferrure 208.

Dans le mode de réalisation de l'invention présenté à la Fig. 3, des rondelles additionnelles ont été mises en place au niveau de la tête de la vis 254 et de l'écrou 255.

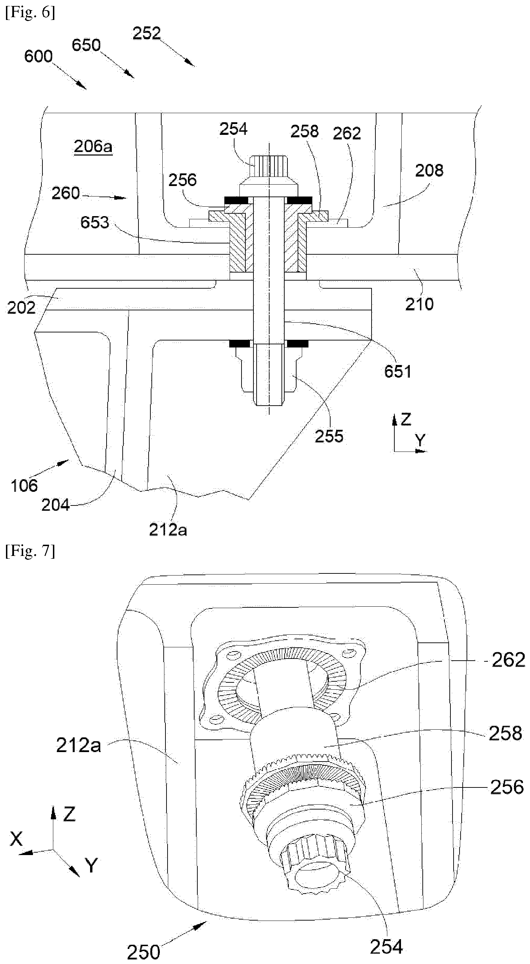

Dans le mode de réalisation de la Fig. 3 et de la Fig. 7 qui est une vue éclatée de l'ensemble de fixation 250, chaque système d'arrêt en rotation 260 comporte une rondelle striée 262 fixée à la pelle latérale 212a-b autour du deuxième alésage 253 et contre la face opposée au longeron supérieur 202. La rondelle striée 262 vient ici entre la pelle latérale 212a-b et l'épaulement de la bague excentrique extérieure 258.

L'épaulement de la bague excentrique extérieure 258 est également strié sur chacune de ses faces, et l'épaulement de la bague excentrique intérieure 256 est également strié sur la face qui est en contact avec l'épaulement de la bague excentrique extérieure 258. L'enfoncement des bagues excentriques 256 et 258 dans les deuxièmes alésages 253 permet une mise en contact et enchevêtrement des différentes stries entre elles et arrête la rotation des bagues excentriques 256, 258

Dans le mode de réalisation des Figs. 4 et 5, chaque système d'arrête en rotation 460 comporte une platine 462 fixée à la pelle latérale 212a-b contre la face opposée au longeron supérieur 202. La fixation est assurée ici par des vis.

La périphérie de l'épaulement de chaque bague excentrique 256, 258 est crantée et pour chaque épaulement, la platine 462 présente un secteur cranté qui est destiné à coopérer avec les crans dudit épaulement pour le bloquer en rotation.

Ainsi, après la mise en place et les réglages des bagues excentriques 256 et 258, la platine 462 est fixée afin de bloquer les bagues excentriques 256 et 258, la vis 254 et l'écrou 255 peuvent alors être serrés afin de finaliser l'assemblage.

Un procédé d'assemblage de l'ensemble 200 consiste en :
- une étape de mise en place au cours de laquelle le mât 106 est positionné par rapport à l'aile 104 en alignant visuellement les huit paires des premiers et deuxièmes alésages 251 et 253, pour chaque paire des premiers et deuxièmes alésages 251 et 253 :
- une étape de présentation au cours de laquelle un ensemble de fixation 250 est présenté au niveau de ladite paire, en insérant l'extrémité de la tige de la vis 254 dans les deuxièmes alésages 253 puis les premiers alésages 251, du fait de l'ajustement des premiers alésages 251, la vis 254 est figée en position de manière concentrique par rapport à l'axe des premiers alésages 251,
- une étape de mise en position au cours de laquelle l'extrémité du fût de la bague excentrique extérieure 258 est amenée à l'entrée du deuxième alésage 253 de la pelle latérale 212a-b sans y pénétrer,
- une étape de réglage au cours de laquelle la bague excentrique intérieure 256 et la bague excentrique extérieure 258 sont manipulées en rotation autour de leurs axes pour aligner la surface extérieure du fût de la bague excentrique extérieure 258 avec le deuxième alésage 253 de la pelle latérale 212a-b, tout en assurant le maintien en position de la vis 254 par rapport aux premiers alésages 251,
- une étape d'enfoncement au cours de laquelle l'ensemble de fixation 250 est enfoncé dans les deuxièmes alésages 253,
- une étape d'arrêt en rotation au cours de laquelle le système d'arrêt en rotation 260 bloque la rotation des bagues excentriques 256 et 258, et
- une étape de serrage au cours de laquelle l'écrou 255 est serré sur la tige de la vis 254.

Lors de l'étape de présentation, la bague excentrique intérieure 256 et la bague excentrique extérieure 258, ainsi qu'ici une rondelle additionnelle sont enfilées sur la tige de la vis 254, avant l'insertion de la tige de la vis 254.

Préférentiellement, le réglage de la bague excentrique intérieure 256 et le réglage de la bague excentrique extérieure 258 s'effectuent avec des pinces qui enserrent les épaulements. A cette fin, les crans des épaulements dans le mode de réalisation de la Fig. 5 facilitent l'engrènement des épaulements par la pince. Dans le mode de réalisation de la Fig. 3, les crans peuvent être remplacés par une forme polygonale, ou hexagonale ou encore bi-hexagonale.

La Fig. 6 montre un deuxième mode de réalisation qui se distingue du premier mode de réalisation par le fait que l'orientation de l'ensemble 600 est inversée.

Pour chaque pelle latérale 212a-b, l'ensemble 600 comporte deux ensembles de fixation 650 où chaque ensemble de fixation 650 assure la fixation de ladite pelle latérale 212a-b à une des ferrures 208 à travers le longeron supérieur 202 et la peau 210.

Pour chaque ensemble de fixation 650, le longeron supérieur 202 et la pelle latérale 212a-b coté mât comportent chacun un premier alésage 651. Le premier alésage 651 du longeron supérieur 202 et le premier alésage 651 de la pelle latérale 212a-b se prolongent l'un l'autre et sont donc coaxiaux.

De la même manière, la peau 210 et la ferrure 208 coté aile comportent chacun un deuxième alésage 653. Le deuxième alésage 653 de la peau 210 et le deuxième alésage 653 de la ferrure 208 se prolongent l'un l'autre et sont donc coaxiaux.

Il y a donc huit paires des premiers alésages 651 et autant de deuxièmes alésages 653. Le premier alésage 651 du longeron supérieur 202 et le premier alésage 651 de la pelle latérale 212a-b ont le même diamètre. Le deuxième alésage 653 de la peau 210 et le deuxième alésage 653 de la ferrure 208 ont le même diamètre. Chaque paire de deuxièmes alésages 653 côté aile s'aligne avec une paire de premiers alésages 651 côté mât, et le diamètre des deuxièmes alésages 653 est supérieur au diamètre des premiers alésages 651.

Chaque ensemble de fixation 650 comporte un boulon 252 avec une vis 254 et un écrou 255, deux bagues excentriques 256 et 258 et un système d'arrêt en rotation 260 qui bloque la rotation des bagues excentriques 256 et 258. À cette fin, la tige de la vis 254 comporte une zone lisse du côté de sa tête et une zone filetée à l'opposé de sa tête. La vis 254 est dimensionnée pour que la zone lisse s'étende le long des premiers alésages 651 et des deuxièmes alésages 653 et la zone filetée est au-delà des premiers alésages 651.

L'ensemble de fixation 650 comporte ainsi une bague excentrique intérieure 256 et une bague excentrique extérieure 258.

Chaque bague excentrique 256, 258 présente un fût et un épaulement, où la surface intérieure du fût et la surface extérieure du fût sont des cylindres de révolution désaxés l'un par rapport à l'autre, c'est-à-dire que leurs axes sont parallèles mais distincts.

La bague excentrique intérieure 256 est enfilée et ajustée en diamètre sur la zone lisse de la tige de la vis 254, la bague excentrique extérieure 258 est enfilée et ajustée en diamètre sur la bague excentrique intérieure 256. Les deux bagues excentriques 256 et 258 sont logées et `montées ajustées' en diamètre dans les deuxièmes alésages 653. La tige de la vis 254 traverse les premiers alésages 651 et les deuxièmes alésages 653 pour que la zone filetée de la vis 254 se visse dans l'écrou 255.

Il est à noter que la notion de montage ajusté précédemment citée consiste à avoir une jonction présentant un axe et un alésage au même diamètre nominal et avec un jeu réduit à son minimum pour en permettre l'assemblage. Ce type de montage dit 'ajusté' est reconnu par l'homme du métier pour pouvoir transmettre des efforts de cisaillement par contact sans risque de glissement et détérioration de la liaison. Un tel montage ajusté est par exemple du type H7g6.

Les épaulements des bagues excentriques 256 et 258 sont pris en sandwich entre une face d'appui de la ferrure 208 et une face d'appui sous la tête de la vis 254.

Il est ainsi possible en tournant indépendamment chaque bague excentrique 256, 258, d'une part, de trouver une combinaison de réglage permettant de rendre coaxial l'axe des premiers alésages 651 côté mât et l'axe de la surface intérieure du fût de la bague excentrique intérieure 256 pour avoir une vis 254 parfaitement alignée avec cet axe, et d'autre part, d'ajuster la position de la surface extérieure du fût de la bague excentrique extérieure 258 par rapport aux deuxièmes alésages 653 côté aile.

Les premiers alésages 651 ont un diamètre adapté au diamètre de la zone lisse de la vis 254 de manière à avoir un montage ajusté, par exemple du type H7g6.

Les écarts entre chaque vis 254 et les alésages qui l'entourent sont alors réduits et les efforts de cisaillement contenus dans le plan XY peuvent être repris par chaque boulon 252 de chaque ensemble de fixation 650 et il n'est plus nécessaire de mettre en place des spigots. Dans le mode de réalisation de l'invention de la Fig. 6, entre la tête de la vis 254 et l'écrou 255, sont pris successivement en sandwich, l'épaulement de la bague excentrique intérieure 256, l'épaulement de la bague excentrique extérieure 258, la ferrure 208, la peau 210, le longeron supérieur 202, et la pelle latérale 212a-b.

Dans le mode de réalisation de l'invention présenté à la Fig. 6, des rondelles additionnelles ont été mises en place au niveau de la tête de la vis 254 et de l'écrou 255.

Dans le mode de réalisation de la Fig. 6, la rondelle striée 262 du système d'arrêt en rotation 260 est fixée à la ferrure 208 autour du deuxième alésage 653 et contre la face opposée à la peau 210. La rondelle striée 262 vient ici entre la ferrure 208 et l'épaulement de la bague excentrique extérieure 258. Les autres stries sur l'épaulement de la bague excentrique intérieure 256 et l'épaulement de la bague excentrique extérieure 258 sont également présentes.

Le système d'arrêt des Figs. 4 et 5 peut également être mis en oeuvre avec la platine 462 fixée à la ferrure 208 contre la face opposée à la peau 210.

Un procédé d'assemblage de l'ensemble 600 consiste en :
- une étape de mise en place au cours de laquelle le mât 106 est positionné par rapport à l'aile 104 en alignant visuellement les huit paires des premiers et deuxièmes alésages 651 et 653, pour chaque paire des premiers et deuxièmes alésages 651 et 653 :
- une étape de présentation au cours de laquelle un ensemble de fixation 650 est présenté au niveau de ladite paire, en insérant l'extrémité de la tige de la vis 254 dans les deuxièmes alésages 653 puis les premiers alésages 651, du fait de l'ajustement des premiers alésages 651, la vis 254 est figée en position concentriquement par rapport à l'axe des premiers alésages 651,
- une étape de mise en position au cours de laquelle l'extrémité du fût de la bague excentrique extérieure 258 est amenée à l'entrée du deuxième alésage 653 de la ferrure 208 sans y pénétrer,
- une étape de réglage au cours de laquelle la bague excentrique intérieure 256 et la bague excentrique extérieure 258 sont manipulées en rotation autour de leurs axes pour aligner la surface extérieure du fût de la bague excentrique extérieure 258 avec le deuxième alésage 653 de la ferrure 208, tout en assurant le maintien en position de la vis 254 par rapport aux premiers alésages 651,
- une étape d'enfoncement au cours de laquelle l'ensemble de fixation 650 est enfoncé dans les deuxièmes alésages 653,
- une étape d'arrêt en rotation au cours de laquelle le système d'arrêt en rotation 260 bloque la rotation des bagues excentriques 256 et 258, et
- une étape de serrage au cours de laquelle l'écrou 255 est serré sur la tige de la vis 254.

Lors de l'étape de présentation, la bague excentrique intérieure 256 et la bague excentrique extérieure 258, ainsi qu'ici une rondelle additionnelle sont enfilées sur la vis 254, avant l'insertion de la tige de la vis 254.

## Revendications

1. Ensemble (200) pour un aéronef (100), ledit ensemble (200) comportant :
- un mât (106) avec un longeron supérieur (202), deux panneaux latéraux (204) qui s'étendent verticalement sous le longeron supérieur (202) et quatre pelles latérales (212a-b), chacune étant fixée à l'extérieur contre un panneau latéral (204) sous le longeron supérieur (202), avec deux pelles latérales (212a-b) par panneau latéral (204) et, par panneau latéral (204), il y a une pelle latérale (212b) au niveau de l'arrière du mât (106) et une pelle latérale (212a) globalement au milieu du mât (106),
- une aile (104) comportant une peau (210), des longerons longitudinaux (206a-b) et des ferrures (208) fixées, d'une part, à l'intérieur de la peau (210) et, d'autre part, aux longerons longitudinaux (206a-b), et
- pour chaque pelle latérale (212a-b), deux ensembles de fixation (250), où pour chaque ensemble de fixation (250), la peau (210) et la ferrure (208) comportent chacune un premier alésage (251) se prolongeant l'un l'autre et le longeron supérieur (202) et la pelle latérale (212a-b) comportent chacun un deuxième alésage (253) se prolongeant l'un l'autre,
où chaque ensemble de fixation (250) comporte :
- une vis (254) traversant les premiers alésages (251) et les deuxièmes alésages (253), et présentant une zone lisse du côté de sa tête et une zone filetée à l'opposé de sa tête,
- un écrou (255) vissé sur la zone filetée de la vis (254), **caractérisé en ce que** l'ensemble comporte
- une bague excentrique intérieure (256), présentant un fût et un épaulement, où la surface intérieure du fût et la surface extérieure du fût sont des cylindres de révolution désaxés l'un par rapport à l'autre, où la bague excentrique intérieure (256) est enfilée sur la zone lisse de la vis (254),
- une bague excentrique extérieure (258), présentant un fût et un épaulement, où la surface intérieure du fût et la surface extérieure du fût sont des cylindres de révolution désaxés l'un par rapport à l'autre, où la bague excentrique extérieure (258) est enfilée sur la bague excentrique intérieure (256), où les deux bagues excentriques (256, 258) sont logées et montées ajustées en diamètre dans les deuxièmes alésages (253), et
- un système d'arrêt en rotation (260, 460) qui bloque la rotation des bagues excentriques (256, 258),
où, entre la tête de la vis (254) et l'écrou (255), sont pris successivement en sandwich, l'épaulement de la bague excentrique intérieure (256), l'épaulement de la bague excentrique extérieure (258), la pelle latérale (212a-b), le longeron supérieur (202), la peau (210), et la ferrure (208).

2. Ensemble (600) pour un aéronef (100), ledit ensemble (600) comportant :
- un mât (106) avec un longeron supérieur (202), deux panneaux latéraux (204) qui s'étendent verticalement sous le longeron supérieur (202) et quatre pelles latérales (212a-b), chacune étant fixée à l'extérieur contre un panneau latéral (204) sous le longeron supérieur (202), avec deux pelles latérales (212a-b) par panneau latéral (204) et, par panneau latéral (204), il y a une pelle latérale (212b) au niveau de l'arrière du mât (106) et une pelle latérale (212a) globalement au milieu du mât (106),
- une aile (104) comportant une peau (210), des longerons longitudinaux (206a-b) et des ferrures (208) fixées, d'une part, à l'intérieur de la peau (210) et, d'autre part, aux longerons longitudinaux (206a-b), et
- pour chaque pelle latérale (212a-b), deux ensembles de fixation (650), où pour chaque ensemble de fixation (650), le longeron supérieur (202) et la pelle latérale (212a-b) comportent chacun un premier alésage (651) se prolongeant l'un l'autre et la peau (210) et la ferrure (208) comportent chacune un deuxième alésage (653) se prolongeant l'un l'autre,
où chaque ensemble de fixation (650) comporte :
- une vis (254) traversant les premiers alésages (651) et les deuxièmes alésages (653), et présentant une zone lisse du côté de sa tête et une zone filetée à l'opposé de sa tête,
- un écrou (255) vissé sur la zone filetée de la vis (254), **caractérisé en ce que** l'ensemble comporte
- une bague excentrique intérieure (256), présentant un fût et un épaulement, où la surface intérieure du fût et la surface extérieure du fût sont des cylindres de révolution désaxés l'un par rapport à l'autre, où la bague excentrique intérieure (256) est enfilée sur la zone lisse de la vis (254),
- une bague excentrique extérieure (258), présentant un fût et un épaulement, où la surface intérieure du fût et la surface extérieure du fût sont des cylindres de révolution désaxés l'un par rapport à l'autre, où la bague excentrique extérieure (258) est enfilée sur la bague excentrique intérieure (256), où les deux bagues excentriques (256, 258) sont logées et montées ajustées en diamètre dans les deuxièmes alésages (653), et
- un système d'arrêt en rotation (260, 460) qui bloque la rotation des bagues excentriques (256, 258),
où, entre la tête de la vis (254) et l'écrou (255), sont pris successivement en sandwich, l'épaulement de la bague excentrique intérieure (256), l'épaulement de la bague excentrique extérieure (258), la ferrure (208), la peau (210), le longeron supérieur (202), et la pelle latérale (212a-b).

3. Ensemble (200, 600) selon l'une des revendications 1 ou 2, **caractérisé en ce que** les premiers alésages (251, 651) ont un diamètre adapté au diamètre de la zone lisse de la vis (254) de manière à avoir un montage ajusté.

4. Ensemble (200, 600) selon l'une des revendications 1 à 3, **caractérisé en ce que** la bague excentrique intérieure (256) est enfilée et ajustée en diamètre sur la zone lisse de la tige de la vis (254), et **en ce que** la bague excentrique extérieure (258) est enfilée et ajustée en diamètre sur la bague excentrique intérieure (256).

5. Ensemble (200, 600) selon l'une des revendications 1 à 4, **caractérisé en ce que** chaque système d'arrêt en rotation (260) comporte une rondelle striée (262) fixée à la pelle latérale (212a-b), respectivement à la ferrure (208), **en ce que** l'épaulement de la bague excentrique extérieure (258) est strié sur chacune de ses faces, et **en ce que** l'épaulement de la bague excentrique intérieure (256) est strié sur la face qui est en contact avec l'épaulement de la bague excentrique extérieure (258).

6. Ensemble (200, 600) selon l'une des revendications 1 à 4, **caractérisé en ce que** chaque système d'arrêt en rotation (460) comporte une platine (462) fixée à la pelle latérale (212a-b), respectivement à la ferrure (208), **en ce que** la périphérie de l'épaulement de chaque bague excentrique (256, 258) est crantée et **en ce que** pour chaque épaulement, la platine (462) présente un secteur cranté qui coopère avec les crans dudit épaulement pour le bloquer en rotation.

7. Aéronef (100) comportant au moins un ensemble selon l'une des revendications 1 à 6.

8. Procédé d'assemblage de l'ensemble (200) de la revendication 1, où le procédé consiste en :
- une étape de mise en place au cours de laquelle le mât (106) est positionné par rapport à l'aile (104) en alignant visuellement les huit paires des premiers et deuxièmes alésages (251, 253),
pour chaque paire des premiers et deuxièmes alésages (251, 253),
- une étape de présentation au cours de laquelle un ensemble de fixation (250) est présenté au niveau de ladite paire, en insérant l'extrémité de la tige de la vis (254) dans les deuxièmes alésages (253) puis les premiers alésages (251),
- une étape de mise en position au cours de laquelle l'extrémité du fût de la bague excentrique extérieure (258) est amenée à l'entrée du deuxième alésage (253) de la pelle latérale (212a-b) sans y pénétrer,
- une étape de réglage au cours de laquelle la bague excentrique intérieure (256) et la bague excentrique extérieure (258) sont manipulées en rotation autour de leurs axes pour aligner la surface extérieure du fût de la bague excentrique extérieure (258) avec le deuxième alésage (253) de la pelle latérale (212a-b), tout en assurant le maintien en position de la vis (254) par rapport aux premiers alésages (251),
- une étape d'enfoncement au cours de laquelle l'ensemble de fixation (250) est enfoncé dans les deuxièmes alésages (253),
- une étape d'arrêt en rotation au cours de laquelle le système d'arrêt en rotation (260, 460) bloque la rotation des bagues excentriques (256, 258), et
- une étape de serrage au cours de laquelle l'écrou (255) est serré sur la tige de la vis (254).

9. Procédé d'assemblage de l'ensemble (200) de la revendication 2, où le procédé consiste en :
- une étape de mise en place au cours de laquelle le mât (106) est positionné par rapport à l'aile (104) en alignant visuellement les huit paires des premiers et deuxièmes alésages (651, 653),
pour chaque paire des premiers et deuxièmes alésages (651, 653),
- une étape de présentation au cours de laquelle un ensemble de fixation (650) est présenté au niveau de ladite paire, en insérant l'extrémité de la tige de la vis (254) dans les deuxièmes alésages (653) puis les premiers alésages (651),
- une étape de mise en position au cours de laquelle l'extrémité du fût de la bague excentrique extérieure (258) est amenée à l'entrée du deuxième alésage (653) de la ferrure (208) sans y pénétrer,
- une étape de réglage au cours de laquelle la bague excentrique intérieure (256) et la bague excentrique extérieure (258) sont manipulées en rotation autour de leurs axes pour aligner la surface extérieure du fût de la bague excentrique extérieure (258) avec le deuxième alésage (653) de la ferrure (208), tout en assurant le maintien en position de la vis (254) par rapport aux premiers alésages (651),
- une étape d'enfoncement au cours de laquelle l'ensemble de fixation (650) est enfoncé dans les deuxièmes alésages (653),
- une étape d'arrêt en rotation au cours de laquelle le système d'arrêt en rotation (260, 460) bloque la rotation des bagues excentriques (256, 258), et
- une étape de serrage au cours de laquelle l'écrou (255) est serré sur la tige de la vis (254).

## Patentansprüche

1. Baugruppe (200) für ein Luftfahrzeug (100), wobei die Baugruppe (200) Folgendes aufweist:
- einen Mast (106) mit einem oberen Längsträger (202), zwei Seitenplatten (204), die sich vertikal unter dem oberen Längsträger (202) erstrecken, und vier Seitenschaufeln (212a - b), die jeweils außen an einer Seitenplatte (204) unter dem oberen Längsträger (202) befestigt sind, wobei pro Seitenplatte (204) zwei Seitenschaufeln (212a - b) vorliegen und pro Seitenplatte (204) eine Seitenschaufel (212b) im hinteren Bereich des Masts (106) und eine Seitenschaufel (212a) im Allgemeinen in der Mitte des Masts (106) vorliegen,
- einen Flügel (104) mit einer Haut (210), seitlichen Längsträgern (206a - b) und Beschlägen (208), die einerseits innerhalb der Haut (210) und andererseits an den seitlichen Längsträgern (206a - b) befestigt sind, und
- pro Seitenschaufel (212a - b) zwei Befestigungsbaugruppen (250), wobei pro Befestigungsbaugruppe (250) die Haut (210) und der Beschlag (208) jeweils eine erste Bohrung (251) aufweisen, die einander verlängern, und wobei der obere Längsträger (202) und die Seitenschaufel (212a - b) jeweils eine zweite Bohrung (253) aufweisen, die einander verlängern, wobei jede Befestigungsbaugruppe (250) Folgendes aufweist:
- eine Schraube (254), die durch die ersten Bohrungen (251) und die zweiten Bohrungen (253), verläuft und auf der Seite ihres Kopfs einen glatten Bereich aufweist und auf der dem Kopf gegenüberliegenden Seite einen Gewindebereich aufweist,
- eine Mutter (255), die auf den Gewindebereich der Schraube (254) aufgeschraubt ist,
**dadurch gekennzeichnet, dass** die Baugruppe Folgendes aufweist:
- einen inneren Exzenterring (256), der einen Schaft und eine Schulter aufweist, wobei die Innenfläche des Schafts und die Außenfläche des Schafts zueinander achsversetzte Rotationszylinder sind, wobei der innere Exzenterring (256) auf den glatten Bereich der Schraube (254) aufgeschoben ist,
- einen äußeren Exzenterring (258), der einen Schaft und eine Schulter aufweist, wobei die Innenfläche des Schafts und die Außenfläche des Schafts zueinander achsversetzte Rotationszylinder sind, wobei der äußere Exzenterring (258) auf den inneren Exzenterring (256) aufgeschoben ist, wobei die beiden Exzenterringe (256, 258) in den zweiten Bohrungen (253) aufgenommen und im Durchmesser passend montiert sind, und
- ein Rotationsstoppsystem (260, 460), das die Rotation der Exzenterringe (256, 258) blockiert,
wobei zwischen dem Kopf der Schraube (254) und der Mutter (255) nacheinander sandwichartig die Schulter des inneren Exzenterrings (256), die Schulter des äußeren Exzenterrings (258), die Seitenschaufel (212a - b), der obere Längsträger (202), die Haut (210) und der Beschlag (208) aufgenommen sind.

2. Baugruppe (600) für ein Luftfahrzeug (100), wobei die Baugruppe (600) Folgendes aufweist:
- einen Mast (106) mit einem oberen Längsträger (202), zwei Seitenplatten (204), die sich vertikal unter dem oberen Längsträger (202) erstrecken, und vier Seitenschaufeln (212a - b), die jeweils außen an einer Seitenplatte (204) unter dem oberen Längsträger (202) befestigt sind, wobei pro Seitenplatte (204) zwei Seitenschaufeln (212a - b) vorliegen und pro Seitenplatte (204) eine Seitenschaufel (212b) im hinteren Bereich des Masts (106) und eine Seitenschaufel (212a) im Allgemeinen in der Mitte des Masts (106) vorliegen,
- einen Flügel (104) mit einer Haut (210), seitlichen Längsträgern (206a - b) und Beschlägen (208), die einerseits innerhalb der Haut (210) und andererseits an den seitlichen Längsträgern (206a - b) befestigt sind, und
- pro Seitenschaufel (212a - b) zwei Befestigungsbaugruppen (650), wobei pro Befestigungsbaugruppe (650) der obere Längsträger (202) und die Seitenschaufel (212a - b) jeweils eine erste Bohrung (651) aufweisen, die einander verlängern, und wobei die Haut (210) und der Beschlag (208) jeweils eine zweite Bohrung (653) aufweisen, die einander verlängern, wobei jede Befestigungsbaugruppe (650) Folgendes aufweist:
- eine Schraube (254), die durch die ersten Bohrungen (651) und die zweiten Bohrungen (653), verläuft und auf der Seite ihres Kopfs einen glatten Bereich aufweist und auf der dem Kopf gegenüberliegenden Seite einen Gewindebereich aufweist,
- eine Mutter (255), die auf den Gewindebereich der Schraube (254) aufgeschraubt ist,
**dadurch gekennzeichnet, dass** die Baugruppe Folgendes aufweist:
- einen inneren Exzenterring (256), der einen Schaft und eine Schulter aufweist, wobei die Innenfläche des Schafts und die Außenfläche des Schafts zueinander achsversetzte Rotationszylinder sind, wobei der innere Exzenterring (256) auf den glatten Bereich der Schraube (254) aufgeschoben ist,
- einen äußeren Exzenterring (258), der einen Schaft und eine Schulter aufweist, wobei die Innenfläche des Schafts und die Außenfläche des Schafts zueinander achsversetzte Rotationszylinder sind, wobei der äußere Exzenterring (258) auf den inneren Exzenterring (256) aufgeschoben ist, wobei die beiden Exzenterringe (256, 258) in den zweiten Bohrungen (653) aufgenommen und im Durchmesser passend montiert sind, und
- ein Rotationsstoppsystem (260, 460), das die Rotation der Exzenterringe (256, 258) blockiert,
wobei zwischen dem Kopf der Schraube (254) und der Mutter (255) nacheinander sandwichartig die Schulter des inneren Exzenterrings (256), die Schulter des äußeren Exzenterrings (258), der Beschlag (208), die Haut (210), der obere Längsträger (202) und die Seitenschaufel (212a - b) aufgenommen sind.

3. Baugruppe (200, 600) nach einem der Ansprüche 1 oder 2, **dadurch gekennzeichnet, dass** die ersten Bohrungen (251, 651) einen Durchmesser aufweisen, der an den Durchmesser des glatten Bereichs der Schraube (254) angepasst ist, um eine passgenaue Montage zu erhalten.

4. Baugruppe (200, 600) nach einem der Ansprüche 1 bis 3, **dadurch gekennzeichnet, dass** der innere Exzenterring (256) auf den glatten Bereich des Schafts der Schraube (254) aufgeschoben und im Durchmesser angepasst ist und dass der äußere Exzenterring (258) auf den inneren Exzenterring (256) aufgeschoben und im Durchmesser angepasst ist.

5. Baugruppe (200, 600) nach einem der Ansprüche 1 bis 4, **dadurch gekennzeichnet, dass** jedes Rotationsstoppsystem (260) eine geriffelte Unterlegscheibe (262) aufweist, die an der Seitenschaufel (212a - b) bzw. am Beschlag (208) befestigt ist, dass die Schulter des äußeren Exzenterrings (258) auf jeder ihrer Seiten geriffelt ist und dass die Schulter des inneren Exzenterrings (256) auf der mit der Schulter des äußeren Exzenterrings (258) in Kontakt stehenden Seite geriffelt ist.

6. Baugruppe (200, 600) nach einem der Ansprüche 1 bis 4, **dadurch gekennzeichnet, dass** jedes Rotationsstoppsystem (460) eine Platine (462) aufweist, die an der Seitenschaufel (212a - b) bzw. am Beschlag (208) befestigt ist, dass der Umfang der Schulter jedes Exzenterrings (256, 258) gezahnt ist und dass bei jeder Schulter die Platine (462) einen gezahnten Sektor aufweist, der mit den Zähnen der Schulter zusammenwirkt, um sie gegen Rotation zu blockieren.

7. Luftfahrzeug (100) mit mindestens einer Baugruppe nach einem der Ansprüche 1 bis 6.

8. Verfahren zur Montage der Baugruppe (200) nach Anspruch 1, wobei das Verfahren in Folgendem besteht:
- einem Aufstellschritt, bei dem der Mast (106) relativ zum Flügel (104) positioniert wird, indem die acht Paare der ersten und zweiten Bohrungen (251, 253) visuell ausgerichtet werden,
pro Paar erster und zweiter Bohrungen (251, 253)
- einem Präsentationsschritt, bei dem eine Befestigungsbaugruppe (250) am Paar präsentiert wird, indem das Schaftende der Schraube (254) erst in die zweiten Bohrungen (253) und dann in die ersten Bohrungen (251) eingeführt wird,
- einem Positionierungsschritt, bei dem das Ende des Schafts des äußeren Exzenterrings (258) an den Eingang der zweiten Bohrung (253) der Seitenschaufel (212a - b) gebracht wird, ohne in diese einzudringen,
- einem Einstellschritt, bei dem der innere Exzenterring (256) und der äußere Exzenterring (258) um ihre Achsen gedreht werden, um die Außenfläche des Schafts des äußeren Exzenterrings (258) mit der zweiten Bohrung (253) der Seitenschaufel (212a - b) auszurichten, während sichergestellt wird, dass die Schraube (254) in Bezug auf die ersten Bohrungen (251) in Position gehalten wird,
- einem Einsetzschritt, bei dem die Befestigungsbaugruppe (250) in die zweiten Bohrungen (253) eingesetzt wird,
- einem Rotationsstoppschritt, bei dem das Rotationsstoppsystem (260, 460) die Rotation der Exzenterringe (256, 258) blockiert, und
- einem Anzugsschritt, bei dem die Mutter (255) auf dem Schaft der Schraube (254) angezogen wird.

9. Verfahren zur Montage der Baugruppe (200) nach Anspruch 2, wobei das Verfahren in Folgendem besteht:
- einem Aufstellschritt, bei dem der Mast (106) relativ zum Flügel (104) positioniert wird, wobei die acht Paare der ersten und zweiten Bohrungen (651, 653) visuell ausgerichtet werden,
pro Paar erster und zweiter Bohrungen (651, 653)
- einem Präsentationsschritt, bei dem eine Befestigungsanordnung (650) am Paar präsentiert wird, indem das Schaftende der Schraube (254) erst in die zweiten Bohrungen (653) und dann in die ersten Bohrungen (651) eingeführt wird,
- einem Positionierungsschritt, bei dem das Ende des Schafts des äußeren Exzenterrings (258) an den Eingang der zweiten Bohrung (653) des Beschlags (208) gebracht wird, ohne in diese einzudringen,
- einem Einstellschritt, bei dem der innere Exzenterring (256) und der äußere Exzenterring (258) um ihre Achsen gedreht werden, um die Außenfläche des Schafts des äußeren Exzenterrings (258) mit der zweiten Bohrung (653) des Beschlags (208) auszurichten, während sichergestellt wird, dass die Schraube (254) in Bezug auf die ersten Bohrungen (651) in Position gehalten wird,
- einem Einsetzschritt, bei dem die Befestigungsbaugruppe (650) in die zweiten Bohrungen (653) eingesetzt wird,
- einem Rotationsstoppschritt, bei dem das Rotationsstoppsystem (260, 460) die Rotation der Exzenterringe (256, 258) blockiert, und
- einem Anzugsschritt, bei dem die Mutter (255) auf dem Schaft der Schraube (254) angezogen wird.

## Claims

1. Assembly (200) for an aircraft (100), said assembly (200) comprising:
- a pylon (106) with an upper spar (202), two lateral panels (204) that extend vertically beneath the upper spar (202) and four lateral scoops (212a-b), each one being fastened on the outside against a lateral panel (204) beneath the upper spar (202), with two lateral scoops (212a-b) per lateral panel (204) and, per lateral panel (204), there is one lateral scoop (212b) at the rear of the pylon (106) and one lateral scoop (212a) generally in the middle of the pylon (106),
- a wing (104) having a skin (210), longitudinal spars (206a-b) and fittings (208) that are fastened both to the inside of the skin (210) and to the longitudinal spars (206a-b), and
- for each lateral scoop (212a-b), two fastening assemblies (250), wherein, for each fastening assembly (250), the skin (210) and the fitting (208) each have a first bore (251), which bores extend one another, and the upper spar (202) and the lateral scoop (212a-b) each have a second bore (253), which bores extend one another,
wherein each fastening assembly (250) has:
- a screw (254) passing through the first bores (251) and the second bores (253), and having a plain zone on the side of its head and a threaded zone opposite its head,
- a nut (255) screwed onto the threaded zone of the screw (254),
**characterized in that** the assembly comprises:
- an inner eccentric ring (256), having a barrel and a shoulder, wherein the inner surface of the barrel and the outer surface of the barrel are cylinders of revolution that are offset with respect to one another, wherein the inner eccentric ring (256) is threaded onto the plain zone of the screw (254),
- an outer eccentric ring (258), having a barrel and a shoulder, wherein the inner surface of the barrel and the outer surface of the barrel are cylinders of revolution that are offset with respect to one another, wherein the outer eccentric ring (258) is threaded onto the inner eccentric ring (256), wherein the two eccentric rings (256, 258) are housed and mounted with a close fit in terms of diameter in the second bores (253), and
- a rotation stopping system (260, 460) that prevents the rotation of the eccentric rings (256, 258), wherein, between the head of the screw (254) and the nut (255), there are successively sandwiched the shoulder of the inner eccentric ring (256), the shoulder of the outer eccentric ring (258), the lateral scoop (212a-b), the upper spar (202), the skin (210), and the fitting (208).

2. Assembly (600) for an aircraft (100), said assembly (600) having:
- a pylon (106) with an upper spar (202), two lateral panels (204) that extend vertically beneath the upper spar (202) and four lateral scoops (212a-b), each one being fastened on the outside against a lateral panel (204) beneath the upper spar (202), with two lateral scoops (212a-b) per lateral panel (204) and, per lateral panel (204), there is one lateral scoop (212b) at the rear of the pylon (106) and one lateral scoop (212a) generally in the middle of the pylon (106),
- a wing (104) having a skin (210), longitudinal spars (206a-b) and fittings (208) that are fastened both to the inside of the skin (210) and to the longitudinal spars (206a-b), and
- for each lateral scoop (212a-b), two fastening assemblies (650), wherein, for each fastening assembly (650), the upper spar (202) and the lateral scoop (212a-b) each have a first bore (651), which bores extend one another, and the skin (210) and the fitting (208) each have a second bore (653), which bores extend one another,
wherein each fastening assembly (650) has:
- a screw (254) passing through the first bores (651) and the second bores (653), and having a plain zone on the side of its head and a threaded zone opposite its head,
- a nut (255) screwed onto the threaded zone of the screw (254),
**characterized in that** the assembly comprises:
- an inner eccentric ring (256), having a barrel and a shoulder, wherein the inner surface of the barrel and the outer surface of the barrel are cylinders of revolution that are offset with respect to one another, wherein the inner eccentric ring (256) is threaded onto the plain zone of the screw (254),
- an outer eccentric ring (258), having a barrel and a shoulder, wherein the inner surface of the barrel and the outer surface of the barrel are cylinders of revolution that are offset with respect to one another, wherein the outer eccentric ring (258) is threaded onto the inner eccentric ring (256), wherein the two eccentric rings (256, 258) are housed and mounted with a close fit in terms of diameter in the second bores (653), and
- a rotation stopping system (260, 460) that prevents the rotation of the eccentric rings (256, 258), wherein, between the head of the screw (254) and the nut (255), there are successively sandwiched the shoulder of the inner eccentric ring (256), the shoulder of the outer eccentric ring (258), the fitting (208), the skin (210), the upper spar (202), and the lateral scoop (212a-b).

3. Assembly (200, 600) according to one of Claims 1 or 2, **characterized in that** the first bores (251, 651) have a diameter adapted to the diameter of the plain zone of the screw (254) so as to have a close fit.

4. Assembly (200, 600) according to one of Claims 1 to 3, **characterized in that** the inner eccentric ring (256) is threaded onto and has a close fit in terms of diameter on the plain zone of the shank of the screw (254), and **in that** the outer eccentric ring (258) is threaded onto and has a close fit in terms of diameter on the inner eccentric ring (256).

5. Assembly (200, 600) according to one of Claims 1 to 4, **characterized in that** each rotation stopping system (260) has a striated washer (262) fastened to the lateral scoop (212a-b), respectively to the fitting (208), **in that** the shoulder of the outer eccentric ring (258) is striated on each of its faces, and **in that** the shoulder of the inner eccentric ring (256) is striated on the face that is in contact with the shoulder of the outer eccentric ring (258).

6. Assembly (200, 600) according to one of Claims 1 to 4, **characterized in that** each rotation stopping system (460) has a plate (462) fastened to the lateral scoop (212a-b), respectively to the fitting (208), **in that** the periphery of the shoulder of each eccentric ring (256, 258) is notched, and **in that**, for each shoulder, the plate (462) has a notched sector that cooperates with the notches of said shoulder so as to prevent it from rotating.

7. Aircraft (100) having at least one assembly according to one of Claims 1 to 6.

8. Method for assembling the assembly (200) of Claim 1, wherein the method consists in:
- a placement step during which the pylon (106) is positioned with respect to the wing (104) by visually aligning the eight pairs of the first and second bores (251, 253),
for each pair of the first and second bores (251, 253),
- a presentation step during which a fastening assembly (250) is presented at said pair, by inserting the end of the shank of the screw (254) into the second bores (253) then the first bores (251),
- a positioning step during which the end of the barrel of the outer eccentric ring (258) is brought to the entrance of the second bore (253) of the lateral scoop (212a-b) without entering it,
- an adjustment step during which the inner eccentric ring (256) and the outer eccentric ring (258) are manipulated in rotation about their axes so as to align the outer surface of the barrel of the outer eccentric ring (258) with the second bore (253) of the lateral scoop (212a-b), while at the same time holding the screw (254) in position with respect to the first bores (251),
- a pushing step during which the fastening assembly (250) is pushed into the second bores (253),
- a rotation stopping step during which the rotation stopping system (260, 460) prevents the rotation of the eccentric rings (256, 258), and
- a tightening step during which the nut (255) is tightened on the shank of the screw (254).

9. Method for assembling the assembly (200) of Claim 2, wherein the method consists in:
- a placement step during which the pylon (106) is positioned with respect to the wing (104) by visually aligning the eight pairs of the first and second bores (651, 653),
for each pair of the first and second bores (651, 653),
- a presentation step during which a fastening assembly (650) is presented at said pair, by inserting the end of the shank of the screw (254) into the second bores (653) then the first bores (651),
- a positioning step during which the end of the barrel of the outer eccentric ring (258) is brought to the entrance of the second bore (653) of the fitting (208) without entering it,
- an adjustment step during which the inner eccentric ring (256) and the outer eccentric ring (258) are manipulated in rotation about their axes so as to align the outer surface of the barrel of the outer eccentric ring (258) with the second bore (653) of the fitting (208), while at the same time holding the screw (254) in position with respect to the first bores (651),
- a pushing step during which the fastening assembly (650) is pushed into the second bores (653),
- a rotation stopping step during which the rotation stopping system (260, 460) prevents the rotation of the eccentric rings (256, 258), and
- a tightening step during which the nut (255) is tightened on the shank of the screw (254).
